# EUROPEAN PATENT APPLICATION

(11) **EP 4 804 548 A1**
(43) Date of publication of application: **09.09.2026**
(21) Application number: 26157748.0
(22) Date of filing: 11.02.2026
(51) Int. Cl.: H04N 23/60, H04N 23/69, H04N 23/695

(54) **CONTROL DEVICE, CONTROL METHOD, AND PROGRAM**

(30) Priority: 03.03.2025 JP 2025033287
(71) Applicant: Canon Kabushiki Kaisha, Tokyo 146-8501 (JP)
(72) Inventor: KODAMA, Yoichi, Ohta-ku, Tokyo, 146-8501 (JP)
(74) Representative: TBK

(57) **Abstract**

A control device includes a receiving means configured to receive designation of a target position of imaging by an imaging apparatus (101) and a setting means configured to set deceleration of movement of an angle position through panning or tilting drive of the imaging apparatus. The receiving means performs control to change a second position, which is different from a first position, based on second designation of designating the second position to the target position in a case where the second designation is received in the middle of the movement of the angle position based on first designation of the first position as the target position. The setting means includes a first mode in which the deceleration is set such that a deceleration time taken by the angle position to stop from a maximum speed (ω2) of the movement is a first period and a second mode in which the deceleration is set such that a deceleration time taken by the angle position to stop from the maximum speed of the movement is longer than the first period.

## Description

### BACKGROUND

### Field

The present disclosure relates to a control technology for panning/tilting drive control used for imaging by an imaging apparatus.

### Description of the Related Art

In recent years, imaging systems that image wedding ceremonies and lecture presentations using cameras capable of performing remote control and video imaging using networks have increased in number with expansion of the video distribution market. Although cameras capable of performing remote operations typically adopt a method of performing operations using hard controllers, a method of performing operations such as panning and tilting using applications operating on PCs and mobile terminals has also been realized.

Applications that successively designate absolute positions such as panning angles and tilting angles of cameras at short intervals have also been realized. In a case where an operator automatically images an athlete running on a track of an athletic field, for example, such angles and angles of view are controlled by designating the absolute position. In this case, smooth camera work is realized by the angles and angles of view gradually moving, and it is possible to reduce a burden on the operator and to efficiently image the state of competition.

Once the panning angle and the tilting angle of the camera reach the designated position in the absolute position designation control, the control is stopped. However, if the next command is received before the camera reaches the stop position, the control does not stop in a case where the control is successively performed in one direction to perform an operation of the next command.

In a case where a stepping motor is used for a panning/tilting drive system, it is necessary to distribute a current of a drive current value to maintain a stop until an excitation period immediately after the stop (excitation period after stop) ends and the camera completely stops. If this stop time is not provided, there is a risk that the stepping motor drops off (steps out) from a designated step, and an intended position may be lost.

Japanese Patent Laid-Open No. 2017-41705 discloses a method of determining an acceleration setting for controlling a panning operation in accordance with conditions of an imaging apparatus placed on a tripod head.

### SUMMARY

According to the technology disclosed in Japanese Patent Laid-Open No. 2017-41705, it is not possible to perform driving on the basis of the next absolute position designation command in a case where an interval of an absolute position designation command after stopping is shorter than the excitation period after the stop.

The present disclosure provides a technology enabling stopping of a panning or tilting operation to be suppressed.

The present disclosure in its first aspect provides control device specified in claim 1. Optional features are specified in claims 2 to 9.
The present disclosure in its second aspect provides control device specified in claim 10. The present disclosure in its third aspect provides a method executed by the control device as specified in claim 11. Optional features are specified in claim 12.

Features of the present disclosure will become apparent from the following description of embodiments with reference to the attached drawings. The following description of embodiments is described by way of example.

### BRIEF DESCRIPTION OF THE DRAWINGS

FIG. 1 is a system configuration diagram according to a first embodiment.
FIG. 2 is a block diagram illustrating an example of a schematic configuration of a camera.
FIG. 3 is a diagram illustrating an example of a schematic configuration of an information processing apparatus in a terminal.
FIG. 4 is a block diagram illustrating a configuration of a panning/tilting control unit.
FIG. 5 is a diagram illustrating an operation of an angle position when an absolute position designation command is received.
FIG. 6 is a diagram illustrating an example of an acceleration/deceleration table in panning driving.
FIG. 7 is a diagram illustrating an example in which the acceleration/deceleration table is updated in a case where a redriving instruction occurs in the middle of a panning driving operation.
FIG. 8 is a diagram illustrating an example of the acceleration/deceleration table in a case where a redriving instruction occurs immediately after a panning operation stops.
FIG. 9 is a diagram illustrating a panning operation example based on control performed by a deceleration control unit.
FIG. 10 is a diagram illustrating a panning operation example in a case where a redriving instruction occurs when the acceleration/deceleration table illustrated in FIG. 9 is used.
FIG. 11 is a diagram illustrating a modification of a panning operation example based on the control performed by the deceleration control unit.
FIG. 12 is a flowchart illustrating processing of the entire camera.
FIG. 13 is a flowchart illustrating processing related to setting of panning/tilting driving performed in S1209 in FIG. 12.
FIG. 14 is a flowchart illustrating a modification of the processing illustrated in FIG. 13.
FIG. 15 is a flowchart illustrating processing related to setting of panning/tilting driving performed in S1209 in FIG. 12 according to a second embodiment.

### DESCRIPTION OF THE EMBODIMENTS

Hereinafter, embodiments of the present disclosure will be described with reference to the drawings. All the plurality of features in the embodiment of the present disclosure are not necessarily essential, and a plurality of features may be arbitrarily combined. Also, the configurations illustrated in the following embodiments are merely examples, and the present disclosure is not limited to the illustrated configurations. The same or similar configurations in the drawings will be denoted by the same reference signs, and repeated description thereof will be omitted.

### First Embodiment

### System Configuration

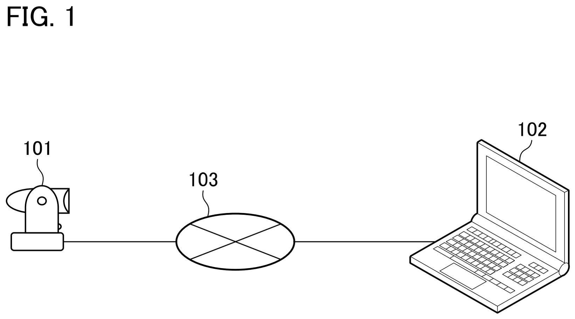

FIG. 1 is a system configuration diagram according to a first embodiment. This system includes a camera 101 and a terminal 102 that are connected to be able to communicate with each other via a network 103. The camera 101 is an example of an imaging apparatus.

The camera 101 is, for example, a network camera or an IP streaming camera. The camera 101 transmits imaging video data and information related to the camera 101 in response to a request from the terminal 102 through the network 103. The camera 101 may actively transmit data to the terminal 102 connected thereto in advance.

The terminal 102 is, for example, a PC, a tablet, or a smartphone and is a general client terminal that includes a display unit such as a display.

The network 103 is implemented by a plurality of routers, switches, cables, and/or the like in compliance with communication standards such as ETHERNET, for example. The network 103 may be implemented by the Internet, a wired local area network (LAN), a wireless LAN, a wide area network (WAN), or the like.

### Camera

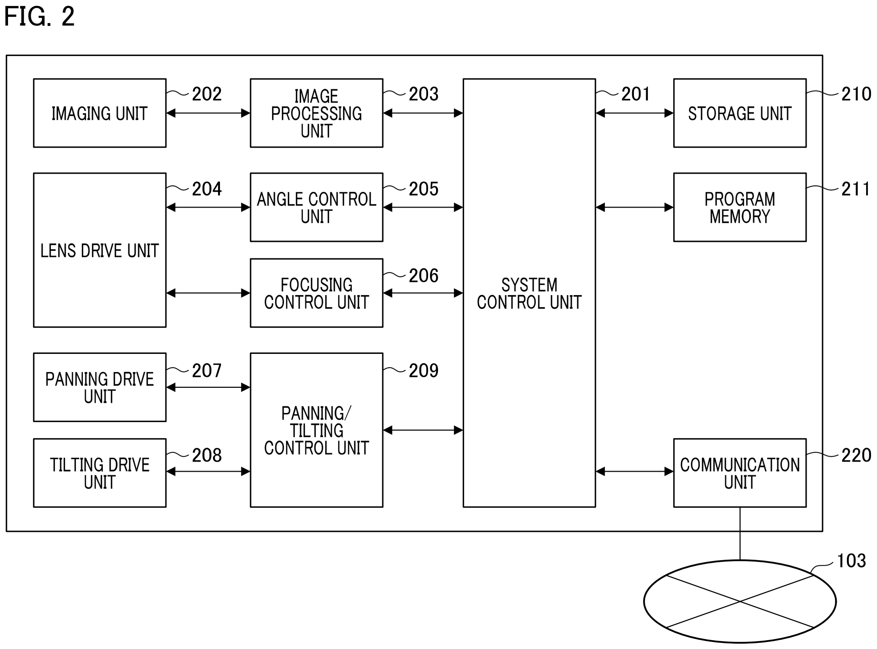

FIG. 2 is a block diagram illustrating an example of a schematic configuration of the camera 101. The camera 101 includes a system control unit 201, an imaging unit 202, an image processing unit 203, a lens drive unit 204, an angle control unit 205, a focusing control unit 206, a panning drive unit 207, a tilting drive unit 208, and a panning/tilting control unit 209. Also, the camera 101 includes a storage unit 210, a program memory 211, and a communication unit 220.

The system control unit 201 controls an entire program and provides instruction for processing to units 202 to 211. The system control unit 201 analyzes camera control commands transmitted by the terminal 102 and received by the communication unit 220 and performs processing in accordance with the camera control commands. The camera control commands are roughly categorized into request commands and setting commands.

The request commands are commands by which the terminal 102 requests acquisition of video data or setting values (which will be described later) from the camera 101. The request commands are categorized into video data request commands and setting value request commands. The video data request commands are commands by which video data is requested to acquire it. The setting value request commands are commands by which setting values are requested to acquire them.

The setting commands are commands by which the terminal 102 requests setting of setting values from the camera 101.

The system control unit 201 receives a video request command from the terminal 102 and distributes video data generated by the image processing unit 203 via the communication unit 220 in response to the video request command. Also, the system control unit 201 receives a setting value request command, which is a request command for at least one of setting values for zooming (Z), focusing (F), and panning/tilting (PT: panning and tilting) of the camera 101 from the terminal 102. The system control unit 201 reads the setting values from the image processing unit 203, the angle control unit 205, the focusing control unit 206, and the panning/tilting control unit 209 in response to the setting value request command and distributes them to the terminal 102 via the communication unit 220. The setting values of FPTZ include not only current values but also related information such as ranges of values that can be set for the camera 101 and the like.

Once a setting command is received, the system control unit 201 orders the image processing unit 203, the angle control unit 205, the focusing control unit 206, and the panning/tilting control unit 209 to perform control based on the setting values. The image processing unit 203, the angle control unit 205, the focusing control unit 206, and the panning/tilting control unit 209 control the imaging unit 202, the lens drive unit 204, the panning drive unit 207, and the tilting drive unit 208, respectively, on the basis of the orders. In this manner, the setting values related to FPTZ set by the terminal 102 are reflected to the camera 101.

The imaging unit 202 includes a lens and an imaging element and performs imaging of an object and conversion into an electrical signal.

The image processing unit 203 performs predetermined image processing, resolution conversion processing, and compression encoding processing on the signal photoelectrically converted by the imaging unit 202 and generates video data. The video data captured by the imaging unit 202 is distributed to the terminal 102 via the network 103 by the communication unit 220.

The lens drive unit 204 includes a drive system for a focusing lens and a zooming lens and a motor serving as a drive source therefor, and is controlled by the angle control unit 205 and the focusing control unit 206.

The angle control unit 205 orders the lens drive unit 204 to change the position of the zooming lens on the basis of the setting value for zooming output from the system control unit 201. Here, the angle control unit 205 manages a focal distance, for example, as a setting value of zooming.

The focusing control unit 206 orders the lens drive unit 204 to change the position of the focusing lens on the basis of the setting value for focusing output from the system control unit 201. The focusing position is changed by the position of the focusing lens being changed.

The panning drive unit 207 includes a mechanical drive system performing panning operations and a motor serving as a drive source, and operations thereof are controlled by the panning/tilting control unit 209. The tilting drive unit 208 is configured of a mechanical drive system performing tilting operations and a motor serving as a drive source, and operations thereof are controlled by the panning/tilting control unit 209.

The motors of the panning drive unit 207 and the tilting drive unit 208 are motors that can be controlled to stop for predetermined periods of time before and after stopping or starting, such as stepping motors.

The panning/tilting control unit 209 orders the panning drive unit 207 and the tilting drive unit 208 to change panning/tilting on the basis of the setting values for panning/tilting output from the system control unit 201. In other words, angle positions in the panning direction and/or the tilting direction at the time of imaging are moved and changed to designated target positions through the driving of the panning drive unit 207 and/or the tilting drive unit 208.

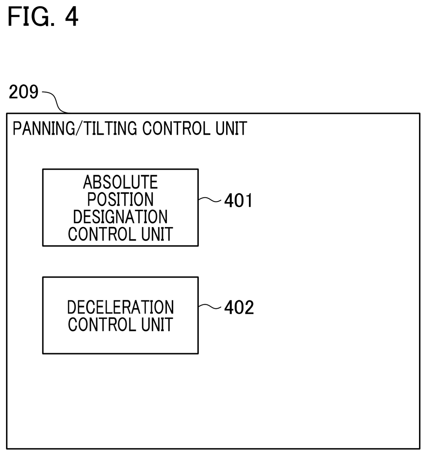

FIG. 4 is a block diagram illustrating a configuration of the panning/tilting control unit 209. The panning/tilting control unit 209 includes an absolute position designation control unit 401 and a deceleration control unit 402. The absolute position designation control unit 401 and the deceleration control unit 402 are parts of a control unit that is included in the panning/tilting control unit 209 and implements a plurality of control methods.

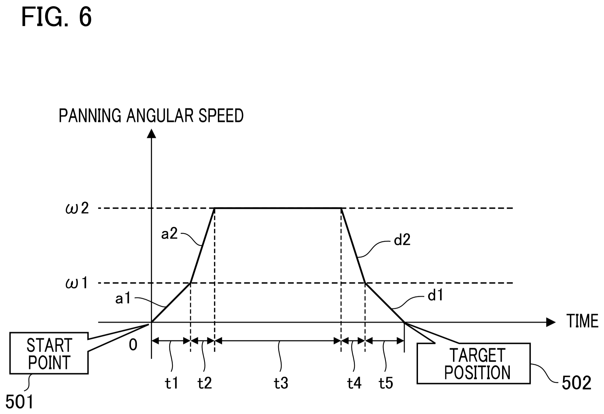

The absolute position designation control unit 401 takes over control from the panning/tilting control unit 209 in a case where a received setting command for a PT setting value is an absolute value designation command. The absolute position designation control unit 401 generates an acceleration/deceleration table. The acceleration/deceleration table is transmitted to the drive units 207 and 208 by the panning/tilting control unit 209 at the time of the ordering to the panning drive unit 207 and the tilting drive unit 208. The absolute position designation control unit 401 generates the acceleration/deceleration table and then returns the control to the panning/tilting control unit 209. The acceleration/deceleration table will be described later using FIG. 6.

The deceleration control unit 402 takes over control from the absolute position designation control unit 401 in a case where the received setting command for the PT setting value is an absolute position designation command and a deceleration has been designated. The deceleration control unit 402 returns the control to the panning/tilting control unit 209 after generating acceleration/deceleration parameters to be used by the absolute position designation control unit 401 to generate the acceleration/deceleration table. The acceleration/deceleration parameters will be described later using FIG. 6.

Here, the panning/tilting control unit 209 also includes an acceleration control unit, which is not illustrated, such that acceleration and deceleration can be independently set. With such a configuration, it is possible to more smoothly perform PT driving by controlling acceleration in accordance with a stage of deceleration.

The system control unit 201, the angle control unit 205, the focusing control unit 206, and the panning/tilting control unit 209 are realized by hardware such as a CPU, an ASIC, and/or an FPGA. The image processing unit 203 is realized by hardware such as a CPU and/or a GPU.

Referring to FIG. 2, the storage unit 210 stores video data in an internal storage and an external storage.

The program memory 211 stores a camera control program. The system control unit 201 executes various kinds of processing on the basis of the camera control program stored in the program memory 211.

The communication unit 220 distributes video data to the terminal 102 via the network 103. Also, the communication unit 220 receives a camera control command transmitted from the terminal 102 and outputs the camera control command to the system control unit 201. Then, the communication unit 220 distributes a response to the terminal 102 in accordance with an instruction from the system control unit 201. The camera control command transmitted from the terminal 102 includes a video request command, a setting value request command, and a setting command as described above. Terminal

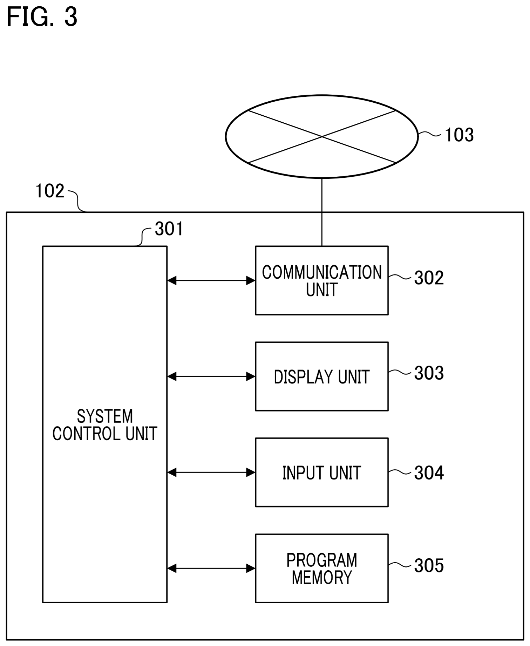

FIG. 3 is a diagram illustrating an example of a schematic configuration of the information processing device according to the present embodiment in the terminal 102. The terminal 102 includes a system control unit 301, a communication unit 302, a display unit 303, an input unit 304, and a program memory 305.

The system control unit 301 controls an entire program and provides instructions for processing to each of the units 302 to 305. The system control unit 301 generates a camera control command such as a PTZ instruction and transmits the camera control command to the camera 101 via the communication unit 302. Once a response from the camera 101 is received by the communication unit 302, the system control unit 301 analyzes the response and performs processing in accordance with the response. The system control unit 301 provides an instruction to reflect the video data received from the camera 101 via the communication unit 302 and reflect the FPTZ setting values to the display unit 303.

The communication unit 302 is adapted to transmit a camera control command and receive various kinds of data distributed from the camera 101.

The display unit 303 is a liquid crystal display device, an organic EL display device, or the like. The display unit 303 is adapted to display video data acquired from the camera 101 and display a graphical user interface (GUI) for controlling the camera.

The input unit 304 is a device such as a keyboard, a mouse, a joystick, or the like. The user of the terminal 102 operates the GUI displayed on the display unit 303 via the input unit 304. Note that a touch panel in which the display unit 303 and the input unit 304 are integrated may be adopted. Although it is desirable to use a joystick (not illustrated) to smoothly perform PTZ operations, another mechanism may be used.

As described above, the terminal 102 can perform video display and command control for the camera 101 via the network 103.

### Absolute Position Designation

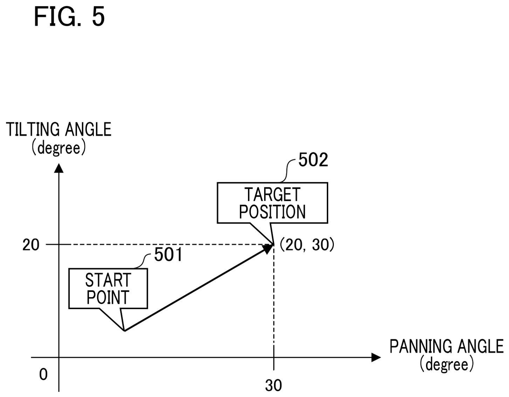

A method of designating absolute positions of a panning angle and a tilting angle by the absolute position designation control unit 401 will be described. FIG. 5 illustrates operations for an angle position when an absolute position designation command is received. Absolute positions (target positions) of the panning angle and the tilting angle are defined on the assumption that the angle when the angle position faces the front, which is the reference direction, is 0 degrees.

As an example of the absolute position designation command, the terminal 102 transmits the following command to the camera 101.
http://[ipaddress]/-wvhttp-01-/control.cgi?pan=30&tilt=20
With this command, the angle position moves to the position at a panning angle of 30 degrees and a tilting angle of 20 degrees as an absolute position. Once a drive instruction is received at a start point 501, and the angle position reaches a target position 502, the panning/tilting control unit 209 stops driving at the position. The panning/tilting control unit 209 or the system control unit 201 is an example of a receiving means that receives designation of a target position of an angle of view of imaging.

Acceleration/deceleration parameters and acceleration/deceleration table

An acceleration/deceleration table will be described. FIG. 6 is a diagram illustrating an example of an acceleration/deceleration table in panning drive. Acceleration/deceleration parameters are held by the panning/tilting control unit 209. The absolute position designation control unit 401 generates the acceleration/deceleration table on the basis of the acceleration/deceleration parameters and transmits the acceleration/deceleration table to the panning drive unit 207 and the tilting drive unit 208. The panning drive unit 207 and the tilting drive unit 208 perform PT drive on the basis of the acceleration/deceleration table. For example, the acceleration/deceleration parameters are updated in response to an instruction from the deceleration control unit 402. The absolute position designation control unit 401 newly generates an acceleration/deceleration table on the basis of the updated latest acceleration/deceleration parameters.

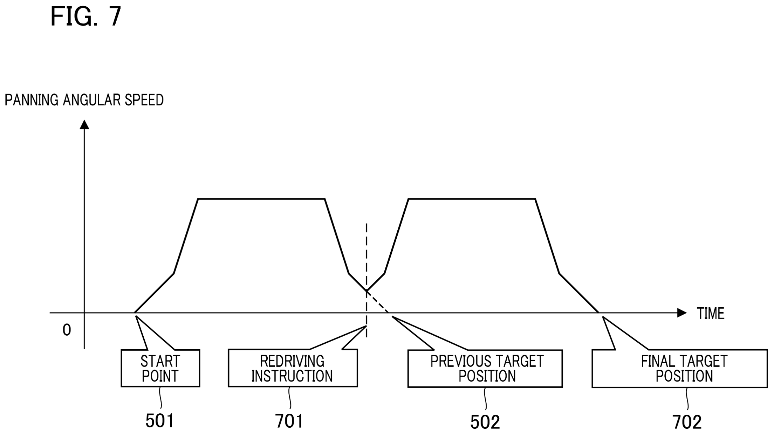

Hereinafter, each parameter in FIG. 6 will be described. Although FIG. 6 provides description in regard to the panning direction for simple explanation, the tilting direction can also be realized in a similar manner. The same applies to FIGS. 7 to 11, which will be described later. Also, a similar method can be applied to the zooming direction (zooming control) as well in a case where a motor similar to the stepping motor used for the panning drive unit 207 and the tilting drive unit 208 is used.

In FIG. 6, the acceleration/deceleration parameters are ω1, ω2, a1, a2, d1, and d2. ω1 is a switching angular speed at which acceleration on a low-speed side (first acceleration) and acceleration on a high-speed side (second acceleration) are switched. ω2 is a target angular speed (maximum angular speed). a1 is the first acceleration, and a2 is the second acceleration. d1 is a deceleration on the low-speed side (first deceleration), and d2 is a deceleration on the high-speed side (second deceleration). t1 is a first period during which driving is performed at the first acceleration, and t2 is a second period during which driving is performed at the second acceleration. t4 is a fourth period during which driving is performed at the second deceleration, and t5 is a fifth period during which driving is performed at the first deceleration. t3 is a third period during which driving is performed at a constant speed at the target angular speed ω2.

The start point 501 and the target position 502 are the same as the start point 501 in FIG. 5. The movement distance of the angle position through the panning drive from the start point 501 to the target position 502 is defined as a panning movement distance p_dist. Similarly, the movement distance of the angle position through the tilting drive from the start point 501 to the target position 502 is defined as a tilting movement distance t_dist.

Note that since the panning/tilting control unit 209 performs panning/tilting angle control in the present embodiment, "acceleration" and "deceleration" described here mean an angular acceleration and an angular deceleration in a strict sense. Although the speeds and the movement distances through the panning/tilting drive will be described below, "speeds" mean angular speeds and "movement distances" mean movement angles in a strict sense.

The panning/tilting control unit 209 holds information regarding a current panning angular speed and panning movement distance p_dist in addition to the acceleration/deceleration parameters. Therefore, it is only necessary to calculate the third period t3 to obtain the acceleration/deceleration table. Although the current panning angle is calculated on the assumption that the angle position is zero during stopping (zero at the start point, for example) for simple explanation, the calculation can be similarly realized even when the angle position is moving. The panning movement distance p_dist can be calculated from a difference between the target position when the absolute position designation is performed and the current panning angle.

The third period t3 can be calculated by (Equation 1) below using the acceleration/deceleration parameters and the panning movement distance p_dist.
(Equation 1) ${t}_{3} = \frac{{p}_{dist} - \left(\frac{1}{2}\frac{{ω}_{1}^{2}}{{a}_{1}}+\frac{{ω}_{1} \left({ω}_{2}-{ω}_{1}\right)}{{a}_{2}}+\frac{1}{2}\frac{{\left({ω}_{2}-{ω}_{1}\right)}^{2}}{{a}_{2}}+\frac{1}{2}\frac{{\left({ω}_{2}-{ω}_{1}\right)}^{2}}{{d}_{2}}+\frac{{ω}_{2} {ω}_{1}}{{d}_{1}}+\frac{1}{2}\frac{{ω}_{1}^{2}}{{d}_{1}}\right)}{{ω}_{2}}$

Equation 1 described above is an equation in a case where the speed at the start point is zero and the speed at the angle position reaches the target speed (target angular speed ω2). It is possible to create an equation in a similar form from these conditions and to calculate the equation even in a case where the speed at the start point is not zero or in a case where the speed does not reach the target speed (target angular speed ω2).

The system control unit 201 or the panning/tilting control unit 209 is an example of a setting means that sets deceleration of movement of the angle position through the panning or tilting drive. The system control unit 201 or the panning/tilting control unit 209 is an example of a control means that performs control to change the angle position to the designated target position in a state where the acceleration/deceleration of the movement of the angle position through the panning/or tilting drive is adjusted.

### Redriving Instruction and Update of Acceleration/Deceleration Table

FIG. 7 is a diagram illustrating an example in which the acceleration/deceleration table is updated in a case where a redriving instruction occurs in the middle of a panning drive operation. FIG. 7 illustrates that when the panning/tilting control unit 209 receives a redriving instruction, the acceleration/deceleration table is overwritten by a new table generated for a new target position without stopping operations based on the table that is being currently used. Here, a minimum time for generating the new table for the new target position is present even in a case where the camera 101 according to the present disclosure acquires the redriving instruction in the middle of the panning operations. In other words, there is a shortest interval to receive an absolute position designation command. In a case where the absolute position designation command is received at a timing equal to or shorter than the interval, overwriting with the new table does not occur. The drive time generated on the basis of the acceleration/deceleration table according to the present disclosure is characterized by being set to be longer than the shortest interval. Furthermore, a drive time generated on the basis of an acceleration/deceleration table for a smooth mode, which will be described later, is characterized by being set to have a length obtained by multiplying the shortest interval by a predetermined number.

As illustrated in FIG. 7, a new drive instruction 701 is generated during movement of the angle position from the start point 501 to the target position 502, and as a result, the new acceleration/deceleration table is generated before a final target position 702. Once the redriving instruction is generated, the panning/tilting control unit 209 generates the new acceleration/deceleration table on the basis of a new absolute position designation command without stopping the current driving. The angle position continues to move toward the final target position 702 on the basis of the new acceleration/deceleration table.

### Redriving Instruction and Operations After Stopping

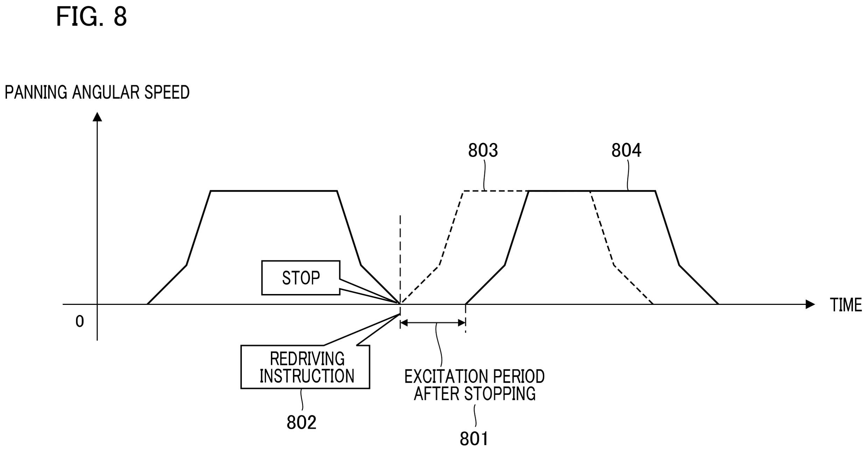

FIG. 8 is a diagram illustrating an example of an acceleration/deceleration table in a case where a redriving instruction occurs immediately after a panning operation stops. FIG. 8 illustrates that a redriving instruction 802 is received after a panning operation stops. Once the redriving instruction 802 occurs, the angle position cannot move on the basis of an acceleration/deceleration table 803 illustrated by the dashed line immediately after the panning movement and can move on the basis of an acceleration/deceleration table 804 after an excitation period after stopping 801. In other words, if the panning operation is once stopped, it is necessary for the angle position to continuously stop at least during the excitation period after stopping 801.

### Control Example of Deceleration Control Unit

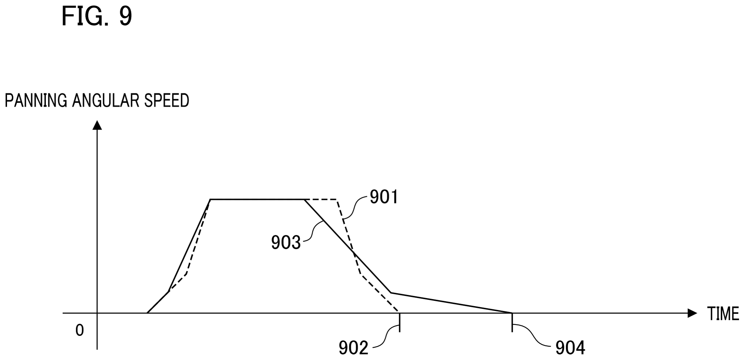

FIG. 9 is a diagram illustrating a panning operation example based on control of the deceleration control unit 402. Setting of deceleration parameters (d1, d2) (FIG. 6) is changed by the deceleration control unit 402 in an acceleration/deceleration table 901 before changing deceleration illustrated by the dashed line. In the example of FIG. 9, both the second deceleration d2 and the first deceleration d1 in an acceleration/deceleration table 903 are set to be smaller than those in the table 901 by the acceleration control unit. Although the second acceleration a2 is smaller than that in the table 901, the setting may not be changed in this manner, or both the first acceleration a1 and the second acceleration a2 may be changed. After the change of the deceleration parameters, the time taken by the angle position to stop is extended from a timing 902 to a timing 904 on the basis of the new deceleration table 903 generated by the absolute position designation control unit 401 and illustrated by the solid line.

Here, the system control unit 201 may change the table to be used from the acceleration/deceleration table 901 to the acceleration/deceleration table 903 in a case where the redriving instruction 802 is not acquired for a predetermined time. In other words, the system control unit 201 can also set the deceleration to extend the deceleration time until stopping at the target position in a case where designation of a target position is not received for a predetermined time. Although the predetermined time is defined as a time that is shorter than the above-described shortest interval at which the absolute position designation command can be received, the present disclosure is not limited thereto. The predetermined time may be able to be set by the user. It is possible to suppress stopping of driving by dynamically changing the acceleration/deceleration table in this manner.

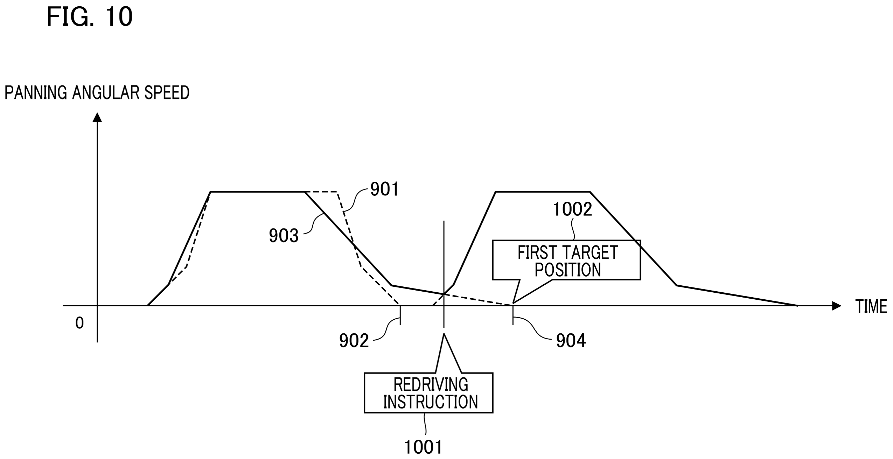

FIG. 10 is a diagram illustrating a panning operation example in a case where a redriving instruction occurs when the acceleration/deceleration table 903 illustrated in FIG. 9 is used. It is assumed that the redriving instruction has occurred in the middle of an extended period obtained by control of the deceleration control unit 402 from the timing 902 to the timing 904. It is assumed that the angle position has stopped at the stop time 902 in a case where the deceleration is not reduced as in the acceleration/deceleration table 901. In this case, the angle position is stopped when a redriving instruction 1001 is transmitted, and it is difficult to avoid occurrence of the excitation period after stopping 801 (FIG. 8).

However, a small deceleration is set by applying the acceleration/deceleration table 903 as described in FIG. 9 in the present embodiment. In other words, the deceleration is set such that the deceleration time taken by the angle position to stop from the maximum speed of movement is longer than the first period (the deceleration period set as illustrated in FIGS. 6 and 8). In this manner, the angle position continues to move to the time 904, and stopping is suppressed by receiving the redriving instruction 1001 during the continuous movement. As a result, it is possible to avoid occurrence of the excitation period after stopping and to effectively reduce stuttering of the panning/tilting operations. Quality of user's viewing experience is thus improved.

The table illustrated in FIG. 9 is an example of an aspect in which acceleration/deceleration is set such that the period until stopping from the maximum speed is longer than a second period taken by the angle position to reach the maximum speed after starting movement.

The acceleration/deceleration table illustrated in FIG. 10 illustrates an example in a case where second designation of designating a second position, which is different from a first position, is received in the middle of the movement of the angle position based on first designation of designating the first position as the target position. In other words, the control mechanism deactivates setting of the acceleration/deceleration based on the first designation and sets the acceleration/deceleration based on the second designation in this case. The same applies to the acceleration/deceleration table illustrated in FIG. 7.

### Processing of Entire Camera

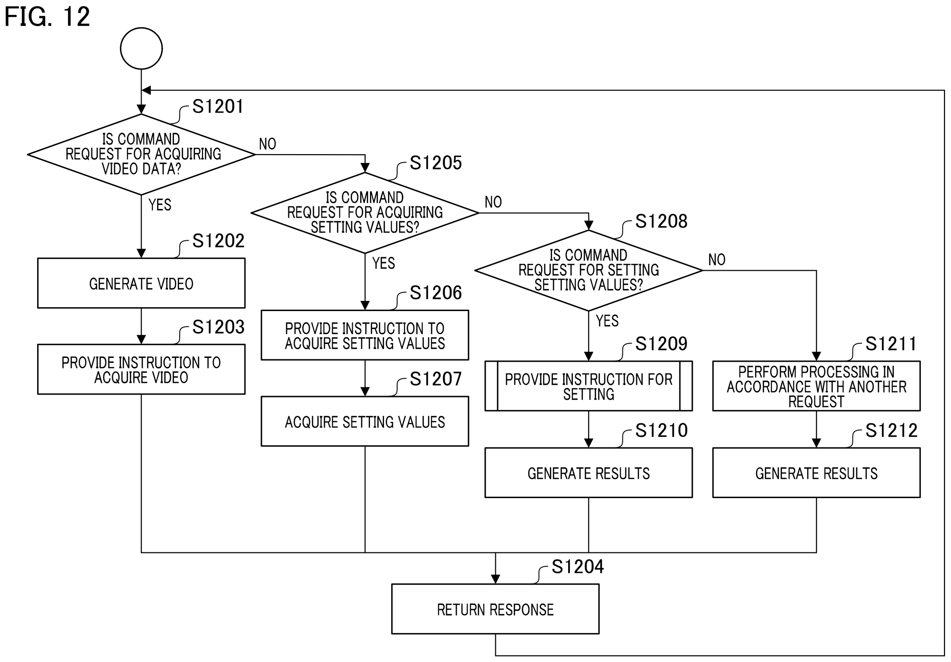

FIG. 12 is a flowchart illustrating processing of the entire camera.

In S1201, the system control unit 201 analyzes a command transmitted by the terminal 102 and received by the communication unit 220. Then, whether the received command is a request for acquiring video data is determined.

In S1202, the image processing unit 203 performs predetermined image processing on a signal acquired from the imaging unit 202 and generates video data in a case where the command is a request for acquiring video data.

In S1203, the system control unit 201 acquires the video data generated by the image processing unit 203 to return a response to the terminal 102.

In S1204, a response is generated, and the generated response is returned to the terminal 102.

In a case where the command is not a request for acquiring video data in S1201, the system control unit 201 determines whether the command is a request for acquiring setting values in S1205.

In S1206, the system control unit 201 provides an instruction to read setting values from the angle control unit 205, the focusing control unit 206, and/or the panning/tilting control unit 209 in a case where the command is a request to acquire setting values. The angle control unit 205, the focusing control unit 206, and/or the panning/tilting control unit 209 will be referred to as control units below.

In S1207, the system control unit 201 acquires corresponding setting values from the control units and moves on to S1204. The setting values are, for example, setting values of FPTZ.

In a case where the command is not a request for acquiring setting values in S1205, the system control unit 201 determines whether the command is a request for setting setting values in S1208.

In a case where the command is a request for setting setting values, the system control unit 201 transmits new setting values to the control units and orders the control units to set the new setting values in S1209.

In S1210, the system control unit 201 executes changing of an angle of view (a field of view), focusing adjustment, setting of panning/tilting drive on the basis of the newly set setting values, generates results (setting completion) thereof, and moves on to S1204.

In a case where the command is not a request for setting setting values in S1208, the system control unit 201 performs processing in accordance with another request in S1211. The command corresponding to another request may include, for example, execution of a diagnosis command.

Once the processing based on another request is completed, the system control unit 201 generates results thereof in S1212 and moves on to S1204.

### Processing Related to Setting of Panning/Tilting Drive

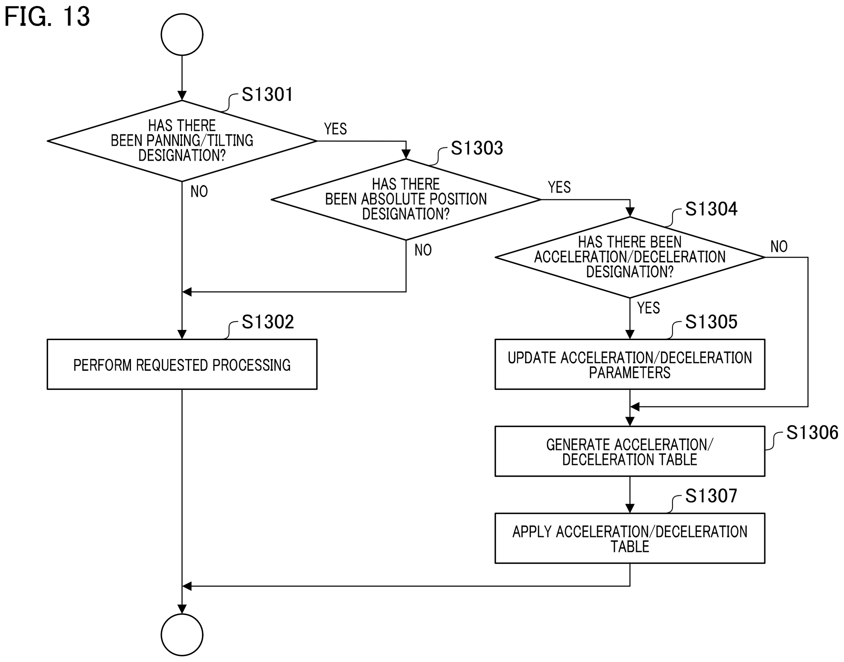

FIG. 13 is a flowchart illustrating processing related to setting of panning/tilting drive performed in S1209 in FIG. 12. In the present embodiment, processing in a case where the system control unit 201 receives an instruction related to panning/tilting drive will be described. Note that since control for each of panning drive and tilting drive is independently performed, the processing illustrated in FIG. 13 is applied to the processing related to setting of each of the panning drive and the tilting drive.

In S1301, the system control unit 201 determines whether or not there has been an instruction to set panning/tilting drive. In a case where there has been no instruction for such an operation, the system control unit 201 moves on to S1302 and executes requested processing.

In a case where there has been an instruction for panning/tilting drive in S1301, the system control unit 201 determines whether or not the instruction is an instruction based on absolute position designation (absolute position designation command) in S1303. In a case where the instruction is not based on the absolute position designation command, the processing proceeds to S1302.

In a case where the instruction is based on absolute position designation in S1303, the deceleration control unit 402 determines whether or not there has been acceleration/deceleration designation in S1304. In other words, this is determination regarding whether or not there has been an instruction to update the acceleration/deceleration parameters described in FIG. 6. In a case where there has been no acceleration/deceleration designation, the processing proceeds to S1306.

In a case where there has been acceleration/deceleration in S1304, the system control unit 201 updates the acceleration/deceleration parameters on the basis of the instruction from the deceleration control unit 402 in S1305. The updating of the acceleration/deceleration parameters includes adjustment of ω1, ω2, a1, a2, d1, and/or d2 illustrated in FIG. 6.

S1306, the absolute position designation control unit 401 generates acceleration/deceleration tables. In a case where the acceleration/deceleration parameters are updated in S1305, acceleration/deceleration tables are generated on the basis of the updated parameters. Here, acceleration/deceleration tables for both P and T are generated.

In S1307, the generated acceleration/deceleration tables are applied to the panning drive unit 207 and the tilting drive unit 208, respectively, via the panning/tilting control unit 209. In this manner, stopping of the angle position is suppressed, and it is possible to avoid occurrence of the excitation period after stopping and to suppress stuttering of panning/tilting operations.

Finally, after the above-described processing is completed, the processing proceeds to S1302, and the system control unit 201 executes other requested processing. Modification 1 of First Embodiment

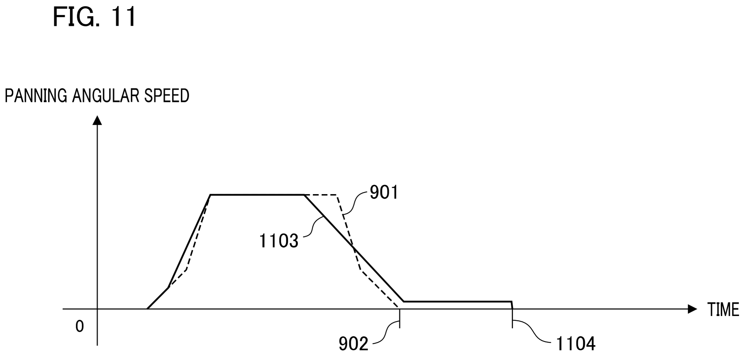

FIG. 11 is a diagram illustrating a modification of a panning operation example based on control of the deceleration control unit 402. In the example in FIG. 11, an acceleration/deceleration table 1103 in which the angle position moves at a constant speed for a specific period of time after the speed of the angle position drops to a predetermined speed immediately before stopping and the angle position is then stopped is applied. The period of the constant speed may be any time as long as it is possible to avoid occurrence of the excitation period after stopping. In this manner, the time taken by the angle position to stop extends from the timing 902 to a timing 1104. Here, the acceleration/deceleration table 901 and the timing 902 are the same as those illustrated in FIG. 9.

As described above, the angle position continues to move to the time 904 by being driven at a low speed immediately before the angle position stops, and the stopping is suppressed by receiving a redriving instruction during the continuous movement. As a result, it is possible to suppress occurrence of the excitation time after stopping and to reduce stuttering of panning/tilting operations.

### Second Modification of First Embodiment

In a second modification, there are an "ordinary mode" and a "smooth mode" as control modes based on setting patterns of an acceleration/deceleration table. The user selects either the "ordinary mode" or the "smooth mode". Once the "ordinary mode" is selected, the panning/tilting control unit 209 performs control based on the acceleration/deceleration table as illustrated in FIGS. 6 and 7, for example. In the acceleration/deceleration table illustrated in FIG. 6, the first acceleration (amount) a1 = the first deceleration (amount) d1 and the second acceleration (amount) a2 = the second deceleration (amount) d2, for example. Once the "smooth mode" is selected, the panning/tilting control unit 209 performs control based on the acceleration/deceleration tables illustrated in FIGS. 9 to 11. The panning/tilting control unit 209 holds acceleration/deceleration parameters for the smooth mode or the ordinary mode in advance.

The ordinary mode is an example of a first mode. The smooth mode is an example of a second mode. A program that selects either the first mode or the second mode is an example of a mode receiving means.

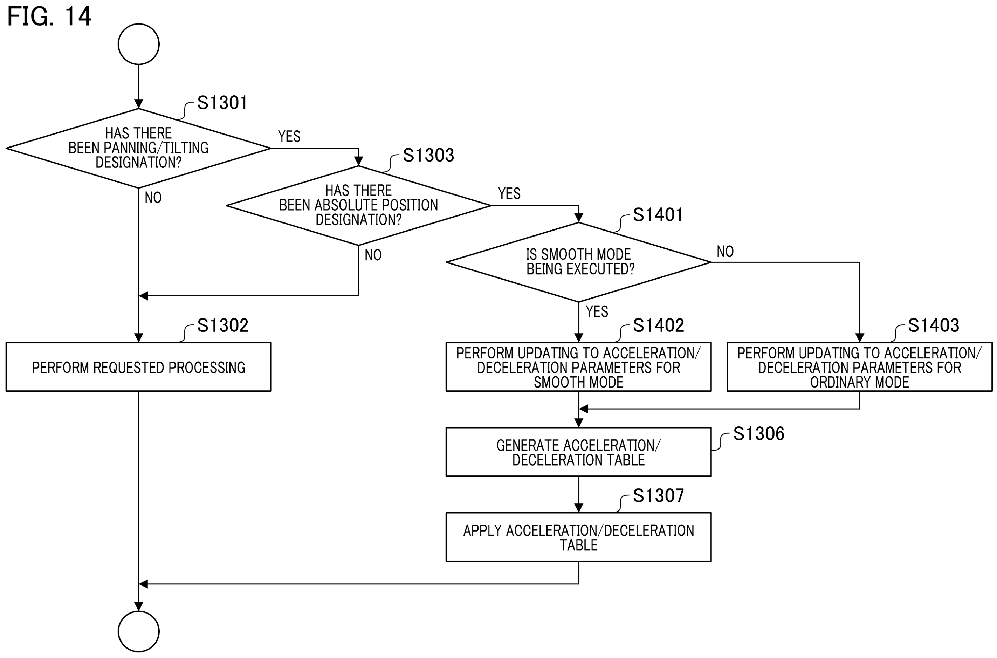

FIG. 14 is a flowchart illustrating processing related to setting of panning/tilting drive performed in S1209 in FIG. 12 and illustrates a modification of the processing in FIG. 13 as a second modification of the first embodiment. Since description of S1301, S1302, S1303, and S1307 has already been given in FIG. 13, the description thereof will be omitted here.

In S1401, the system control unit 201 determines whether the current operation mode is a smooth mode. In a case of the smooth mode, the system control unit 201 moves on to S1402 and applies the acceleration/deceleration parameters for the smooth mode. The acceleration/deceleration parameters for the smooth mode are held by the panning/tilting control unit 209 in advance in addition to the acceleration/deceleration parameters for the ordinary mode. Here, two or more acceleration/deceleration parameters of different numerical values may be held. Note that the acceleration/deceleration parameters for the smooth mode may be generated by another method as long as it is possible to suppress stopping by extending the time until stopping and receiving a redriving instruction in the middle of the extended time as described in FIGS. 9 and 11.

In S1402, the system control unit 201 updates the parameters to the acceleration/deceleration parameters for the smooth mode on the basis of the instruction of the deceleration control unit 402. In the updating, the parameters ω1, ω2, a1, a2, d1, and d2 are updated to those suitable for the smooth mode.

On the other hand, in a case where the current operation mode is not the smooth mode in S1401, that is, in a case where the current operation mode is the ordinary mode, updating to the acceleration/deceleration parameters (FIG. 6, for example) for the ordinary mode is performed in S1403.

In S1306, an acceleration/deceleration table based on the acceleration/deceleration parameters updated in S1402 or S1403 is generated.

As described above, the smooth mode is applied as needed, and smooth operations with no stuttering by panning/tilting drive can be performed.

### Second Embodiment

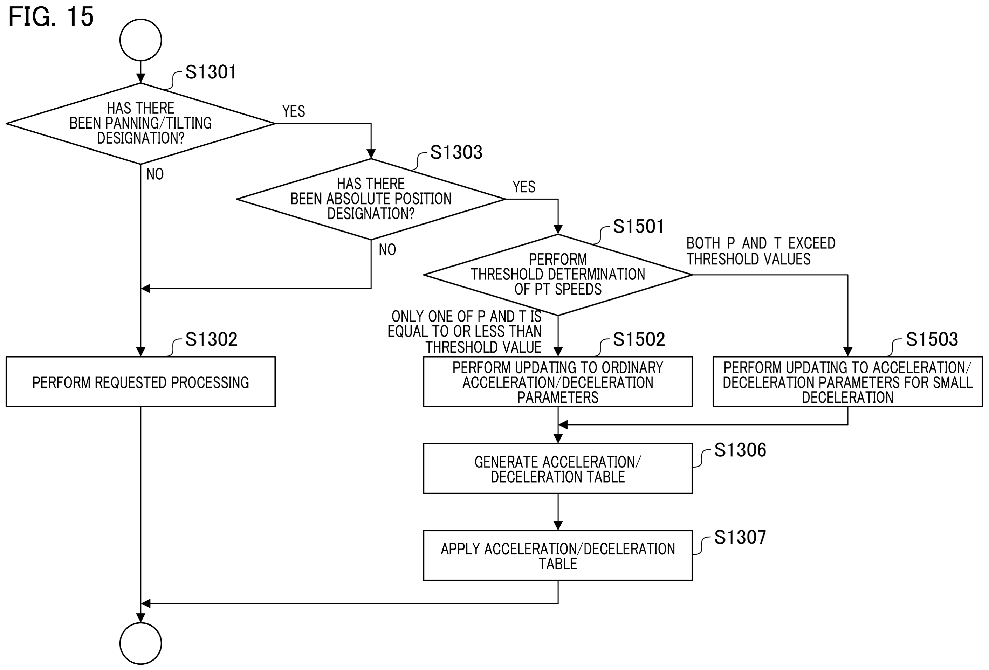

FIG. 15 is a flowchart illustrating processing related to setting of panning/tilting drive performed in S1209 in FIG. 12 according to a second embodiment. In the present embodiment, a method of controlling deceleration on the basis of panning and tilting speed threshold values will be described. Since description of S1301 to S1303, S1306, and S1307 has already been given in FIG. 13, the description will be omitted here.

In S1501, the system control unit 201 determines whether either a current panning speed component or a current tilting speed component is equal to or less than a predetermined threshold value. The system control unit 201 or the panning/tilting control unit 209 is an example of a determination means that performs determination based on each of threshold values of speed components in the panning and tilting drive of the angle position.

In a case where either the panning speed component or the tilting speed component is equal to or less than the predetermined threshold value, the system control unit 201 updates acceleration/deceleration parameters of both P and T to ordinary acceleration/deceleration parameters, respectively, in S1502. The ordinary acceleration/deceleration parameters are acceleration/deceleration parameters for the ordinary mode, for example. The threshold value is set on the assumption of a case where the other speed component is sufficiently small relative to one speed component. Alternatively, the threshold value is set to a value that is close to zero, for example.

In a case where both the panning speed component and the tilting speed component exceed their threshold values, in S1503, the system control unit 201 updates the deceleration parameters to become smaller than the deceleration parameters. Here, updating to the above-described acceleration/deceleration parameters for the smooth mode, for example, may be performed.

As described above, it is possible to perform driving in the ordinary mode in a case where only the panning speed component or only the tilting speed component is equal to or less than the threshold value, that is, when it is not necessary to perform the smooth mode, and reactions such as inversion of movement, in particular, are improved. On the other hand, in a case where both the panning speed component and the tilting speed component exceed their threshold values, smooth operations with no stuttering through the panning/tilting drive are held by applying the smooth mode.

### Other Embodiments

The present disclosure is not limited to the above-described embodiments, various modifications (including organic combinations of the embodiments) can be made on the basis of the gist of the present disclosure, and the modifications are not excluded from the scope of the present disclosure.

In the acceleration/deceleration table illustrated in FIG. 6, for example, the acceleration time (t1 + t2) from the start point 501 includes the period during which the angle position moves at a plurality of different accelerations (a1 and a2, for example). Similarly, the deceleration time (t4 + t5) until the movement stops includes the period during which the angle position moves at a plurality of different decelerations (d2 and d1, for example). These are matters common to the other acceleration tables in FIGS. 9, 11, and the like. However, the present disclosure is not limited thereto, and one acceleration/deceleration table may include a single acceleration and/or a single deceleration. Alternatively, one acceleration/deceleration table may include three or more accelerations and/or decelerations.

The above-described operations of the angle position by the panning drive unit 207 and the tilting drive unit 208 are rotational motion. However, the panning drive unit 207 and the tilting drive unit 208 may have devices to linearly move the angle position. As the devices to linearly move the angle position, it is possible to adopt known conversion devices that linearly convert rotation motors or to adopt linear motors, for example.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

This application claims the benefit of Japanese Patent Application No. 2025-33287, filed March 3, 2025, which is hereby incorporated by reference wherein in its entirety.

## Claims

1. A control device comprising:
a receiving means (401) configured to receive designation of a target position (502) of imaging by an imaging apparatus (101); and
a setting means (209) configured to set deceleration of movement of an angle position through panning or tilting drive used in imaging by the imaging apparatus,
wherein the receiving means performs control to change a second position, which is different from a first position, based on second designation of designating the second position to the target position in a case where the second designation is received in the middle of movement of the angle position based on first designation of designating the first position as the target position, and
wherein the setting means includes a first mode in which the deceleration is set such that a deceleration time taken by the angle position to stop from a maximum speed (ω2) of the movement is a first period and a second mode in which the deceleration is set such that the deceleration time taken by the angle position to stop from the maximum speed of the movement is longer than the first period.

2. The control device according to claim 1 or 2,
wherein the setting means sets acceleration or deceleration such that the period until the stopping from the maximum speed is longer than a second period taken by the angle position to reach the maximum speed after starting the movement.

3. The control device according to any one of claims 1 to 3,
wherein the first period includes a period during which the angle position moves at a plurality of different decelerations.

4. The control device according to claim 1,
wherein the first period includes a period during which the angle position moves at a constant speed.

5. The control device according to any one of claims 1 to 4,
wherein the first mode is a mode in which an acceleration or deceleration is set such that a third period taken by the angle position to reach the maximum speed after starting the movement and a fourth period until the stopping from the maximum speed is the same, and the second mode is a mode in which the acceleration or deceleration is set such that the first period is longer than each of the third period and the fourth period.

6. The control device according to claim 5, further comprising:
a mode receiving means configured to receive selection of either the first mode or the second mode.

7. The control device according to claim 5, further comprising:
a determination means configured to perform threshold determination of speed components in the panning and tilting drive of the angle position,
wherein the setting means sets the first mode in a case where a speed component of either the panning drive or the tilting drive is equal to or less than a threshold value, or sets the second mode in a case where both the speed components in the panning and tilting drive exceed the threshold value.

8. The control device according to any one of claims 2 to 6, further comprising:
a determination means (201) configured to perform determination based on threshold values of speed components in the panning and tilting drive of the angle position,
wherein the setting means sets the deceleration such that the period until the stopping from the maximum speed is longer than the second period in a case where both the speed components in the panning and tilting drive exceed the threshold value.

9. The control device according to any one of claims 1 to 8,
wherein the setting means sets the deceleration such that a deceleration time until stopping at the target position is extended in a case where the receiving means has not received the designation of the target position for a predetermined time.

10. A control device comprising:
a receiving means (401) configured to receive designation of a target position of imaging by an imaging apparatus; and
a control means (209) configured to perform control to change an angle position to the designated target position in a state where acceleration or deceleration of movement of the angle position through panning or tilting drive of the imaging apparatus is adjusted,
wherein in a case where second designation of designating a second position, which is different from a first position, is received in the middle of movement of the angle position on the basis of first designation of designating the first position as the target position, the control means deactivates control based on the first designation and performs control based on the second designation.

11. A method for a control device, the method comprising:
receiving designation of a target position of imaging by an imaging apparatus (S1303 to S1307); and
setting deceleration of movement of an angle position through panning or tilting drive of the imaging apparatus (S1305 and S1306),
wherein in the receiving of the designation of the target position, control is performed to change a second position, which is different from a first position, based on second designation of designating the second position to a target position in a case where the second designation is received in the middle of the movement of the angle position based on first designation of designating the first position as the target position, and
wherein modes for setting the deceleration of movement of an angle position include a first mode in which the deceleration is set such that a deceleration time taken by the angle position to stop from a maximum speed (ω2) of the movement is a first period and a second mode in which the deceleration is set such that the deceleration time taken by the angle position to stop from the maximum speed of the movement is longer than the first period.

12. A program causing a computer to execute the method according to claim 11.
